# EUROPÄISCHE PATENTSCHRIFT

(11) **EP 4 280 918 B1**
(45) Veröffentlichungstag und Bekanntmachung des Hinweises auf die Patenterteilung: **17.12.2025**
(21) Anmeldenummer: 22700832.3
(22) Anmeldetag: 18.01.2022
(51) Int. Cl.: A47J 31/36, A47J 31/52, A47J 31/42

(54) **VERFAHREN ZUM BETRIEB EINES KAFFEEVOLLAUTOMATEN UND KAFFEEVOLLAUTOMAT**
METHOD FOR OPERATING A COFFEE MACHINE, AND COFFEE MACHINE
PROCÉDÉ DE FONCTIONNEMENT D'UNE MACHINE À CAFÉ ENTIÈREMENT AUTOMATIQUE ET MACHINE À CAFÉ ENTIÈREMENT AUTOMATIQUE

(30) Priorität: 20.01.2021 DE 102021101151
(43) Veröffentlichungstag der Anmeldung: 29.11.2023
(73) Patentinhaber: Melitta Professional Coffee Solutions GmbH & Co. KG, 32429 Minden (DE)
(72) Erfinder: BUCHHOLZ, Bernd, 32369 Rahden (DE); DIESTER, Thomas, 31675 Bückeburg (DE); WILKE, Patrick, 31675 Bückeburg (DE)
(74) Vertreter: Kleine, Hubertus
(86) Internationale Anmeldenummer: PCT/EP2022/051004
(87) Internationale Veröffentlichungsnummer: WO 2022/157144

(56) Entgegenhaltungen:
- WO-A1-2007/060694
- DE-A1- 3 316 157
- DE-C1- 4 240 175
- DE-U1- 202006 014 317
- DE-U1- 202016 008 296

## Beschreibung

Die vorliegende Erfindung betrifft ein Verfahren zum Betrieb eines Kaffeevollautomaten nach dem Oberbegriff des Anspruchs 1, sowie einen erfindungsgemäßen Kaffeevollautomaten.

Der Fachmann kennt Kaffeevollautomaten, welche nach der Espresso-Methode - also unter Druck - diverse Kaffeevarianten herstellen.

Weiterhin gibt es seit Langem herkömmliche Maschinen zur Herstellung von Filterkaffee. Dabei wird aufgrund des vergleichsweise langsamen und druckarmen Brühvorgangs ein Kaffee mit sehr ausgewogenem Geschmack und Aroma erzielt.

Bei der herkömmlichen Espresso-Herstellung erfolgt eine schnelle Aromaentfaltung. Durch den Brühvorgang, der bei einem Kaffeevollautomaten in der Regel bei weniger als 30 Sekunden für eine Tasse Kaffee liegt, werden durch den Druck von ca. 7,5-9 bar mehr ätherische Öle und Aromen freigesetzt, jedoch durch die kurze Brühdauer weniger Koffein, Gerbsäuren und Bitterstoffe. Es gibt Liebhaber für beide Kaffeearten.

Die DE 42 40 175 C1 offenbart eine Brüheinheit mit einer selbsttätig arbeitenden Kaffeemaschine. Die Wahl der Kaffeeherstellung erfolgt durch die Brühstellung des Brühkolbens. Café Crème wird durch Kaffeepressung hergestellt, wohingegen Filterkaffee ohne Kaffeepressung erfolgt. Eine ähnliche Einstellung zwischen Cremekaffee und Filterkaffee erfolgt in der DE 33 16 157 A1.

Die EP 0 909 542 A1 offenbart eine Kaffeemaschine zum wahlweisen Brühen eines Filterkaffees und eines Espressokaffees.

Die US 6 513 419 B2 und die WO 2007/060 694 A1 offenbaren jeweils eine Kaffeemaschine zur Zubereitung verschiedener Kaffeesorten, dabei u.a. Filterkaffee.

Diese vorgenannten Dokumente offenbaren keinerlei Unterteilung des Brühvorgangs des Filterkaffees in mehrere Brühphasen. Eine ausgewogene Extraktion der jeweiligen Geschmacksstoffe kann daher nicht erreicht werden.

Als weiterer Stand der Technik wird die gattungsgemäße DE 20 2016 008 296 U1 angegeben, welcher allerdings nicht die Herstellung von Filterkaffee bezieht.

Die DE 102018 116 306 A1 offenbart verschiedene Charakteristika eines Filterkaffees in Abgrenzung zu anderen Kaffeesorten, so z.B. von Espresso. Eine Zubereitung von Filterkaffee mit mehreren Brühphasen ist nicht offenbart, vielmehr erfolgt Beimischung von Kaffeepulver in diesem Fall parallel zum Brühvorgang, wobei die Wassermenge/ Volumenstrom konstant oder vorzugsweise veränderbar sein und vorzugweise auch einmal oder laufend überwacht werden kann.

Der Erfindung liegt daher die Aufgabe zu Grunde, einen Kaffeeautomaten derart zu betreiben, dass ein Kaffee mit einem zu Filterkaffee vergleichbaren Geschmack bereitgestellt wird.

Die Erfindung löst die Aufgabe durch ein Betriebsverfahren mit den Merkmalen des Anspruchs 1 und durch das Bereitstellen eines erfindungsgemäßen Kaffeevollautomaten.

Geschaffen wird danach ein Verfahren zur Herstellung eines Kaffeegetränks mit einem Filterkaffeegeschmack durch einen Kaffeevollautomaten, wobei der Kaffeevollautomat zumindest eine Brüheinheit mit einer Brühkammer und einen in der Brühkammer beweglich, insbesondere linear verschiebbaren, Kolben zur Einstellung eines Brühkammervolumens aufweist, wobei das Verfahren, mit zumindest folgenden Schritten:
a. Befüllen der Brühkammer mit Kaffeemehl; und
b. Zuführen von Wasser in die Brühkammer zum Zwecke einer Extraktion im Rahmen eines Brühvorgangs,

wobei zumindest der Kolben während zumindest einer Brühphase des Brühvorgangs in einer Position angeordnet ist, in welcher das Brühkammervolumen größer ist als das Volumen des Kaffeemehls in einem geschütteten Zustand in der Brühkammer nach der erfolgten Befüllung gemäß Schritt a, wobei der Brühvorgang mehrere Brühphasen aufweist, in welchen jeweils Wasser mit, bezogen auf die Brühphasen unterschiedlichen Durchflussraten durch das Kaffeemehl geleitet werden und wobei der Wechsel zwischen den Brühphasen durch messtechnische Erfassung und/oder Ermittlung einer physikalischen Größe, insbesondere der Leitfähigkeit, des Brechungsindex und/oder der zugeführten Menge und/oder Volumen an Kaffeemehl und/oder Wasser und/oder der abgeführten Menge an Kaffee erfolgt,
wobei ferner der Kaffeevollautomat eine Bypassleitung ausgehend von einem Warmwasserboiler zu einer Ausgabeeinheit mit einem oder mehreren Regelorganen aufweist, wobei eine Ausgabe von Heißwasser, vorzugsweise zeitgleich zum Brühvorgang und/oder der Ausgabe von Kaffee aus der Brüheinheit, zum Erreichen eines vorbestimmten Kaffeevolumens erfolgt.

Derartige Kaffeevollautomaten sind an sich bekannt, werden aber üblicherweise nicht zur Herstellung eines Filterkaffees benutzt, sondern zur Herstellung von Espresso oder espressobasierenden Getränken.

Der Kolben wird dabei mechanisch durch einen Aktuator, z.B. motorisch oder hydraulisch, bewegt, wodurch das Brühkammervolumen eingestellt wird.

Der geschüttete Zustand bezieht sich auf das Schüttvolumen, das entsteht, wenn eine Menge an Kaffeemehl, die der Menge an Kaffeemehl in der Brühkammer aus Schritt a. entspricht, unverdichtet vorliegt.

In der ersten Position des Kolbens ist das Volumen der Brühkammer derart erweitert, dass eine Suspension von Kaffeemehl und Wasser vorliegen kann, in welcher das Kaffeemehl abgesetzt am Boden der Brühkammer und/oder schwimmend in der Suspension vorliegen kann.

Das Kaffeemehl kann im geschütteten Zustand bei Beginn des Schrittes b. im Wesentlichen unverdichtet vorliegen. Was im Wesentlichen bedeutet, dass eine geringe Verdichtung des Kaffeemehls zum Zwecke eines Informbringens möglich ist. Typischerweise weist eine Schüttung eine kegelförmige Gestalt auf. Allerdings kann das Informbringen in eine zylindrische Form ohne dass das Volumen des Kaffeemehls im größeren Umfang mechanisch verpresst wird erfolgen. Demgegenüber ist eine nicht-mechanische Verpressung und/oder Verdichtung einer Kaffeemehlschüttung, also eine Verpressung bzw. Verdichtung ohne eine von außen einwirkende mechanische Kraft, inhärent für das Brühverfahren durch die Quellung des Kaffeemehls.

Das Kaffeemehl kann nach erfolgter Befüllung und insbesondere vor dem Brühvorgang etwas verdichtet werden. In einer bevorzugten Ausführungsvariante liegt das Kaffeemehl allerdings im Wesentlichen unverdichtet vor. Dies bedeutet, dass das Kaffeemehl gegenüber einem geschütteten Zustand, also als lose Schüttung, um weniger als 15 Vol.%, insbesondere weniger als 10 Vol.%, verdichtet ist.

Diese verschwindend geringe Verdichtung kann im Rahmen eines In Form-Bringens des Kaffeemehls erfolgen, beispielsweise um dem Kaffeemehl eine zylindrische Grundform zu verleihen, in welcher die Extraktion gleichmäßiger erfolgt als bei einer schüttungstypischen Kegelform.

Das Wasser kann sodann während der zumindest einen Brühphase durch das Kaffeemehl fließen, ohne dass eine gegenüber dem geschütteten Zustand weiter verdichtende mechanische Anpresskraft auf das Kaffeemehl ausgeübt wird. Bedingt durch das Quellen des Kaffeemehls kann es allerdings trotzdem zu einer Verdichtung kommen, ohne dass hierfür eine äußere mechanische Anpresskraft auf das Kaffeemehl ausgeübt wird. Insbesondere kann in Schritt b. zugeführtes Wasser im Wesentlichen ohne Beaufschlagung einer Anpresskraft durch das Kaffeemehl fließen.

Der Kolben ist somit in eine zweite Position verschiebbar bzw. stellbar, in welcher er das Kaffeemehl, vorzugsweise vor dem Brühvorgang, in Form bringt. Dadurch kann eine gleichmäßige Verteilung innerhalb der Brühkammer in Abhängigkeit von der Kaffeemehlmenge erreicht werden.

Weiterhin und ebenfalls optional kann der Kolben in der ersten Position maximal zurückgefahren sein, wodurch das Volumen der Brühkammer maximal erweitert ist. Einzelne Brühphasen können in dieser maximal ausgefahrenen Position vorgenommen werden. Dabei kann auch ein Luftraum zwischen der Suspension und der Stirnfläche des Kolbens vorhanden sein. Die besagte erste Position muss allerdings auch nicht zwingend den maximal ausgefahrenen Zustand abbilden, sondern kann auch geringer sein.

Zusätzlich zu der Hauptbrühphase können auch weitere Brühphasen vorgesehen sein. Auch vorbereitende oder nachbereitende Schritte wie Kaffeemahlen oder eine anschließende Reinigung z.B. durch CIP (clean in place) kann Teil des erfindungsgemäßen Verfahrens sein. Dabei müssen bei der CIP-Reinigung Teile nicht demontiert werden und eine Reinigung kann innerhalb des Vollautomaten durch automatische Prozesse erfolgen.

Durch das Verfahren ist es auf unkomplizierte Weise möglich, eine Filterkaffeeherstellung in einem Kaffeevollautomaten zu implementieren. Das freie Wasservolumen ermöglicht u.a. ein Aufschwämmen des Kaffeemehls. Zudem kann das Kaffeemehl im unverdichteten Zustand leichter umströmt werden.

Für eine ausgewogene Extraktion der jeweiligen Geschmacksstoffe ist es von Vorteil, wenn der Brühvorgang mehrere Brühphasen, in welchen jeweils Wasser mit, bezogen auf die Brühphasen, unterschiedlichen Durchflussraten durch das Kaffeemehl geleitet wird.

Der Wechsel zwischen den Brühphasen erfolgt erfindungsgemäß vorzugsweise durch messtechnische Erfassung und/oder Ermittlung einer physikalischen Größe, insbesondere der Leitfähigkeit, des Brechungsindex und/oder der zugeführten Menge an Kaffeemehl und/oder Wasser und/oder der abgeführten bzw. ausgeleiteten Kaffeemenge bzw. -volumens. Dadurch kann das Maximum an Geschmacksstoffen extrahiert werden. Dabei ist Kaffee ein Naturprodukt, dessen Geschmacksstoffe je nach Anbaugebiet, Röstungsverfahren, Lagerung usw. variieren kann. Bevorzugt ist dabei die Variante eines wassermengengesteuerten Wechsels in Abhängigkeit der Ausgabemenge, unter Einbeziehung der Kaffeemehlmenge.

Vorteilhafte Ausgestaltungen der Erfindung sind Gegenstand der Unteransprüche.

Wie zuvor beschrieben, kann der Kolben während des Brühvorgangs in einer ersten Position verharren, welche nachfolgend auch als Ruheposition beschrieben wird.

Bevorzugt kann das Brühkammervolumen zu Beginn von Schritt b zumindest 50% größer sein, vorzugsweise doppelt so groß sein, wie das Volumen des Kaffeemehls im geschütteten, insbesondere unverdichteten, Zustand.

Weiterhin bevorzugt und vorteilhaft ist die Brühkammer derart aufgebaut, dass zu Beginn von Schritt b lediglich das Kaffeemehl innerhalb der Brühkammer angeordnet ist. Vielmehr grenzt an die Schüttung aus Kaffeemehl das freie Volumen der Brühkammer an, welches mit Heißwasser in Schritt b. ausgefüllt wird.

Es ist in diesem Kontext insbesondere von Vorteil, wenn der Brühvorgang
a) eine erste Brühphase mit einer ersten Durchflussrate und
b) eine zweite Brühphase mit einer zweiten Durchflussrate und/oder vorzugsweise eine dritte Brühphase mit einer dritten Durchflussrate aufweist,
wobei die zweite Durchflussrate kleiner sein kann als die erste und/oder die dritte Durchflussrate.

Vorteilhaft ist die Unterteilung des Brühvorgangs in mindestens 2, vorzugsweise 3 Brühphasen, welche jeweils eine von mindestens 2, vorzugsweise 3, unterschiedlichen Durchflussraten zugeordnet werden kann.

Beispielsweise kann die vorgenannte zweite Brühphase als Hauptbrühphase ausgebildet sein. Weiterhin kann die erste Brühphase als Anbrühphase und die dritte Brühphase als Nachbrühphase ausgebildet sein. Diese Einteilung bzw. zeitliche Abfolge ist allerdings nicht zwingend vorgeschrieben. So kann die besagte zweite Brühphase auch zugleich die erste oder die letzte Brühphase des Brühvorgangs sein.

Diese Prozessphasen laufen vorteilhaft nacheinander und besonders bevorzugt unmittelbar nacheinander ab.

Dabei ist die zweite Durchflussrate vorzugsweise kleiner ist als die dritte Durchflussrate, welche wiederum vorzugsweise kleiner ist als die erste Durchflussrate.

Die Durchflussrate für zumindest eine Brühphase des Brühvorgangs kann dabei vergleichsweise langsam sein und weniger oder gleich 10 ml/s, vorzugsweise 2-5 ml/s, betragen.

Bevorzugt kann die Durchflussrate für zumindest die zweite Brühphase des Brühvorgangs 2-5 ml/s betragen. Ebenfalls bevorzugt kann die Durchflussrate für zumindest die erste Brühphase des Brühvorgangs 5-10 ml/s betragen. Zudem kann die Durchflussrate für zumindest die dritte Brühphase des Brühvorgangs 10-15 ml/s betragen.

Der Kaffeevollautomat kann zudem eine Kaffeemühle umfassen, wobei das Verfahren eine Mahlung von Kaffeebohnen auf eine vordefinierte Größe für Filterkaffee umfasst. Bekanntermaßen ist der Mahlgrad für Filterkaffee gröber als der Mahlgrad für Espressokaffee. Daher ist es von Vorteil, wenn die Betriebsparameter der Kaffeemühle bei dem Getränkewunsch bzw. der Auswahl "Filterkaffee" durch den Nutzer auf einen für Filterkaffee optimalen Mahlgrad vom Kaffeevollautomaten automatisch eingestellt werden.

Der Mahlgrad kann gemäß DIN 44 539 ermittelt werden. Die DIN 44 539 definiert drei Abstufungen zur Klassifizierung des Mahlgrads. Hierbei werden Korngrößen definiert die einen Anteil von Mehr als 50% des Mahlgutes, im vorliegenden Fall des Kaffeemehls, ausmachen müssen. Der Wert x_{50, 3} gibt dabei im Messprotokoll an, dass 50% der Mahlverteilung gröber und 50 % feiner sind als der angeführte Messwert. Die Ermittlung der einzelnen Korngrößenanteile erfolgt mit dem Luftstrahlsiebverfahren nach DIN 10 765. Die vorgenannten Vorschriften beziehen sich auf die jeweils aktuelle Fassung zum Prioritätszeitpunkt der vorliegenden Erfindung.

### Mahlgrad "fein"

Alle Korngrößen bis maximal 0,25 mm ergeben einen Anteil von mehr als 50%

### Mahlgrad "mittel"

Die Korngröße zwischen 0,25 mm und 0,71mm ergeben einen Anteil von mehr als 50%.

### Mahlgrad "grob"

Alle Korngrößen größer als 0,71 mm ergeben einen Anteil von mehr als 50%.

Für das vorliegende Verfahren empfiehlt sich ein Mahlgrad von "mittel" oder besonders bevorzugt von "grob".

Es empfiehlt sich, wenn der Kolben vor dem Brühvorgang ein Informbringen des Kaffeepulvers vornimmt, so dass das Volumen der Brühkammer während des Informbringens und zu dessen Zweck verringert wird.

Der Kolben wird nach dem ersten Informbringen wieder zurückgezogen und liegt dadurch nicht auf dem Kaffeemehl auf. Dadurch entsteht ein großer Brühraum, in welchem mehr Platz für das Quellen des Kaffeemehls bei Wasserkontakt zur Verfügung steht. Zugleich weist unverdichtetes Kaffeemehl einen geringeren Durchfluss-Widerstand auf.

Bei dieser Arbeitsweise kann man von einem unverdichteten Durchflussverhalten ausgehen. Beim Herstellen von üblichem Filterkaffee in einem Kaffeefilter muss sich hingegen das Kaffeepulver oft erst absetzen, was zusätzlichen Zeitaufwand bedeutet. Weiterhin ist es von Vorteil, wenn vor dem Brühvorgang der Kolben zurückgefahren wird, so dass sich das Volumen der Brühkammer wieder erweitert, vorzugsweise zumindest um 100 % gegenüber dem Volumen im in Form gebrachten Zustand, so dass eine langsame Extraktion und druckarmes Durchlaufen des Wassers ermöglicht wird.

Es ist von Vorteil, wenn der Kolben während des gesamten Brühvorgangs in einer Ruheposition verbleibt. Der Kolben kann auch während des Anbrühens und/oder des Nachbrühens bewegt werden.

Zumindest während einer Brühphase empfiehlt sich eine langsame Extraktion.

Darüber hinaus kann der Kaffeevollautomat einen Filter, z.B. ein Sieb und insbesondere einen CIP-fähigen Permanentfilter aufweisen.

Eine Änderung der Brühphasen kann insbesondere durch Erfassen einer Leitfähigkeit und/oder eines Lichtbrechungsindex erfolgen, wobei ein Messaufnehmer zur Erfassung strömungstechnisch hinter der Brüheinheit angeordnet ist, so dass das Messergebnis des fertigen Kaffees, also des Endproduktes, als Grundlage der Änderung genommen wird. Alternativ und bevorzugt kann der Messaufnehmer auch vor der Brüheinheit angeordnet sein, um die Eigenschaften noch während der Zubereitung zu beeinflussen.

Besonders bevorzugt kann eine Änderung der Brühphasen durch Erfassen einer zugeführten Menge an Wasser unter Berücksichtigung der zugeführten Menge an Kaffeemehl eingestellt werden. Die zugeführte Menge an Kaffeemehl kann beispielsweise im Rahmen einer Einstellung der Mahlleistung berücksichtigt werden. Die Mahlleistung in mg/s bei einem voreingestellten Mahlgrad kann auf Kundenwunsch für ein bestimmtes Volumen an Filterkaffee auf die Wassermenge angepasst werden.

Weiterhin beträgt der Brühdruck während des Brühvorgangs vorzugsweise weniger als 2,5 bar.

Bevorzugt ist die Brühkammer bis auf einen Auslauf für Kaffee während des Brühvorgangs geschlossen. Ggf. kann ebenfalls noch ein Zulauf für Heißwasser geöffnet sein.

Bevorzugt erfolgt ein stufenweises Einstellen der Durchflussrate während des Brühvorgangs zum Wechsel zwischen zwei Brühphasen. Vorzugsweise kann der Wechsel zwischen allen weiteren Brühphasen des Brühvorgangs ebenfalls stufenweise eingestellt werden.

Erfindungsgemäß ist zudem ein Kaffeevollautomat umfassend zumindest eine Brüheinheit mit einem linear verschiebbaren Kolben zur Einstellung eines Volumens einer Brühkammer der Brüheinheit und eine Steuer- und/oder Auswerteeinheit, welche eingerichtet ist zur Ausführung eines erfindungsgemäßen Verfahrens.

Der Kaffeevollautomat weist einen Warmwasserboiler auf, wobei ein Durchflussmengenbegrenzer zur Einstellung einer Durchflussrate zwischen dem Heißwasserboiler und der Brüheinheit angeordnet sein kann. Dieser ermöglicht die Einstellung der Durchflussrate nach der jeweiligen ersten, zweiten und/oder dritten Brühphase und/oder ggf. weiteren optionalen Brühphasen.

Der Durchflussmengenbegrenzer kann eine Mehrzahl von Regelorganen, z.B. Ventilen, aufweisen, welche ausgebildet sind zur stufenweisen Einstellung der Durchflussrate zur Gewährleistung eines Brühvorgangs mit mehreren Brühphasen mit unterschiedlichen Durchflussraten. Eine gestufte Einstellung ermöglicht dabei eine sehr direkte Einstellung einer gewünschten Durchflussrate, während bei einer stufenlosen Einstellung häufig eine schwer zu erfassende Nachlaufmenge eine weniger optimale Dosierung erlaubt.

Nachfolgend wird die Erfindung anhand eines Ausführungsbeispiels eines erfindungsgemäßen Verfahrens unter Zuhilfenahme der nachfolgenden Figuren näher erläutert. Es zeigen:
- Fig. 1a: ein schematischer Aufbau einer ersten Variante eines erfindungsgemäßen Kaffeevollautomaten;
- Fig. 1b: ein schematischer Aufbau einer zweiten Variante eines erfindungsgemäßen Kaffeevollautomaten;
- Fig. 1c: ein schematischer Aufbau einer dritten Variante eines erfindungsgemäßen Kaffeevollautomaten;
- Fig. 2a-g: Detailansichten einer Brüheinheit des Kaffeevollautomaten mit einem Kolben in unterschiedlichen Betriebspositionen während der Ausführung des erfindungsgemäßen Verfahrens;
- Fig. 3: eine Messung diverser physikalischer Größen in Abhängigkeit vom Verlauf des Brühvorgangs beim Ausführen des erfindungsgemäßen Verfahrens;
- Fig. 4: Messdiagramm einer beispielhaften Kaffeeextraktion, z.B. anhand einer Leitfähigkeit, über einen Brühvorgang mit mehreren Brühphasen gemäß einer ersten Ausführungsvariante des erfindungsgemäßen Verfahrens; und
- Fig. 5: Messdiagramm einer beispielhaften Kaffeeextraktion, z.B. anhand einer Leitfähigkeit, über einen Brühvorgang mit mehreren Brühphasen gemäß einer zweiten Ausführungsvariante des erfindungsgemäßen Verfahrens.

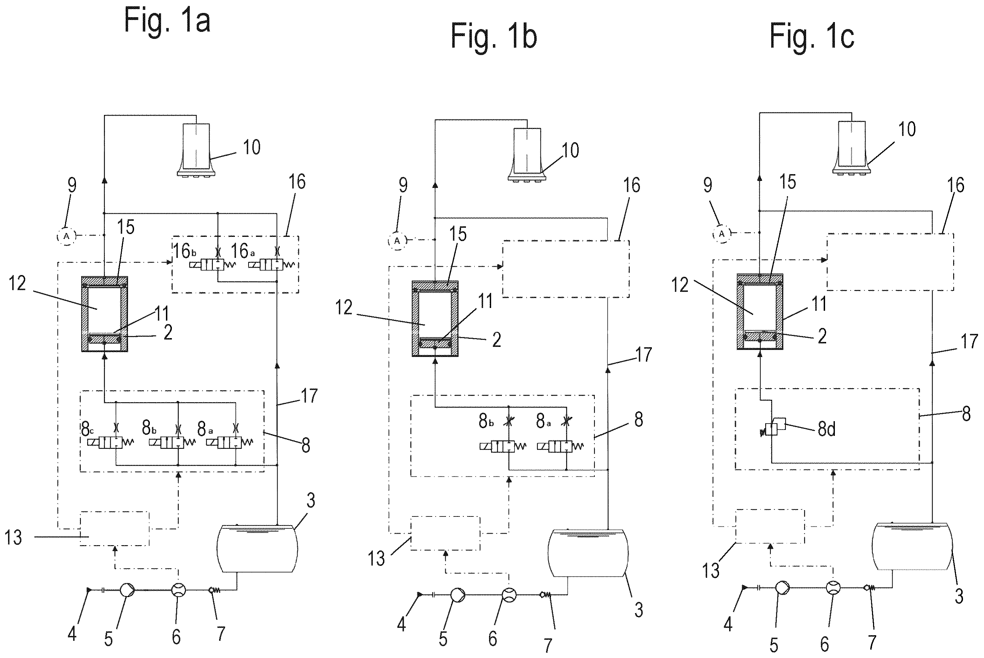

In den Fig. 1 ist der grundsätzliche Aufbau eines erfindungsgemäßen Kaffeevollautomaten 1 dargestellt.

Der Kaffeevollautomat 1 weist eine Brüheinheit 2 und einen Warmwasserboiler 3 als zentrale Baueinheiten auf. Zur Zuführung von Wasser weist der Kaffeevollautomat einen Wasserzulauf 4 auf. Dies kann z.B. ein entnehmbares Wasserreservoir oder einen Anschluss an eine Wasserleitung sein.

Weiterhin weist der Kaffeevollautomat 1 eine Wasserpumpe 5 zur Förderung des zugeführten Wassers in den Warmwasserboiler 3 auf.

Zudem weist der Kaffeevollautomat 1 eine Messeinrichtung zur Durchflussmengenbestimmung 6 auf. Diese ist im vorliegenden Ausführungsbeispiel strömungstechnisch vor dem Warmwasserboiler 3 angeordnet und ermöglicht an dieser Position eine Regelung der Wasserzulaufmenge in den Boiler. Alternativ oder zusätzlich kann auch eine analoge Messeinrichtung zur Durchflussmengenbestimmung zwischen dem Warmwasserboiler 3 und der Brüheinheit 2 und/oder strömungstechnisch hinter der Brüheinheit 2 angeordnet sein. Die Messeinrichtung zur Durchflussmengenbestimmung 6 kann vorteilhaft als Flügelradzähler ausgebildet sein.

Weiterhin weist die Zulaufleitung vor dem Warmwasserboiler 3 ein Rückstoßventil 7 auf.

Der Warmwasserboiler 3 erhitzt sodann das zugeführte Wasser auf eine Temperatur von vorzugsweise 80-96°C. Innerhalb dieses Temperaturbereichs kann eine variable Einstellung der Wassertemperatur nach gewünschtem Heißgetränk erfolgen. Weiterhin kann der Kaffeevollautomat über eine nicht-dargestellte Leitung zur Kaltwasserbeimischung verfügen, um eine produktindividuelle Einstellung der Brühtemperatur zu erreichen. Das derart erwärmte Wasser wird sodann, vorzugsweise dosiert, an die Brüheinheit 2 weitergeleitet.

Sofern der Wasserboiler 3 oder alternativ auch die Brüheinheit 2 eine Dosiervorrichtung nicht bereits implementiert hat, kann zwischen dem Wasserboiler 3 und der Brüheinheit 2 zur genaueren Dosierung der in den jeweiligen Verfahrensschritten benötigten Durchflussmengen an warmem Wasser ein Durchflussmengenbegrenzer 8 vorgesehen sein.

Der Durchflussmengenbegrenzer der Fig. 1a ermöglicht eine gestufte Einstellung, insbesondere eine gestufte Steuerung, der Durchflussrate des der Brüheinheit 2 zugeführten Heißwassers. Hierfür sind in Fig. 1a jeweils drei Brühventile 8a-8c vorgesehen, wobei jedes der Brühventile einen unterschiedlichen Querschnitt aufweisen kann und folglich eine unterschiedliche Durchflussrate in die Brüheinheit repräsentiert. Bevorzugt ist dabei jeweils ein Brühventil geöffnet, während die anderen beiden Brühventile geschlossen sind.

In der Variante der Fig. 1b ist der Durchflussmengenbegrenzer 8 durch zwei Brühventile 8a und 8b realisiert. Auch hier sind insgesamt zumindest drei Durchflussraten einstellbar, durch Öffnung jeweils der einzelnen Brühventile 8a oder 8b oder durch gleichzeitige Öffnung beider Ventile 8a und 8b. Vorzugsweise sind in der Variante der Fig. 1b die Querschnitte und somit Durchflussrate nach dem Ventil stufenlos einstellbar z.B. manuell eingestellt Nadelventile. Somit ist eine stufenlose Durchflussmengeneinstellung einer ansonsten gestuft-eingestellten Zuführung einer Wassermenge möglich.

Fig. 1c offenbart eine Variante in welcher ein stufenloses Ventil 8d zur Einstellung der Durchflussrate eingesetzt wird. Ein stufenweiser Wechsel der Durchflussraten ist allerdings bevorzugt, um eine direkte und schnelle Regelung zu ermöglichen. Weiterhin kann aus Redundanzgründen bei der stufenweisen Variante bei Ausfall eines Ventils immer noch ein Notbetrieb für den Kaffeebezug mit verringerten Wahloptionen gewährleistet werden. Zudem ist durch die gestufte Einstellung der Fig. 8a und 8b ein schnelles Zu- und Ableiten bei klaren bzw. eindeutigen Schaltzuständen möglich.

Während bei Espressomaschinen an dieser Stelle oftmals ein Druckbegrenzer vorgesehen ist, bietet sich hier bevorzugt ein Durchflussmengenbegrenzer, z.B. eine Drossel, vorzugsweise eine variabel ansteuerbare Drossel, an. Alternativ kann auch die Funktionen eines Druckbegrenzers und eines Durchflussmengenbegrenzers gemeinsam in einem Regelorgan implementiert werden, so dass der Kaffeevollautomat vielseitiger, also zur Herstellung von mehr Kaffeevarianten, einsetzbar ist.

Die Brüheinheit 2 weist vorzugsweise eine Brühkammer 12 auf, deren Volumen durch einen linear-verfahrbaren Kolben 11 einstellbar ist. Die Kolbenposition ist variabel einstellbar. Weiter weist die Brüheinheit 2 einen Filter 15, vorzugsweise einen Permanentfilter auf. Der Permanentfilter ist vorzugsweise CIP-fähig. Beim Permanentfilter kann es sich insbesondere um ein Mikrofeinsieb handeln. Besonders bevorzugt kann das Sieb zumindest 30.000 Löcher, vorzugsweise zumindest 40.000 Löcher, auf 1.*10³ mm aufweisen.

Die Befüllung der Brüheinheit mit Kaffeemehl kann durch eine manuelle Befüllung, also durch Direkteinwurf des Mehls, z.B. über einen Zuführschacht, erfolgen, oder aber durch Mahlen ganzer Bohnen unmittelbar vor dem Zuführen in die Brüheinheit. Hierfür kann der Kaffeevollautomat eine nicht-dargestellte Kaffeemühle aufweisen. Da Kaffeemehl für Filterkaffee im Vergleich zu Espressopulver meist einen gröberen Mahlgrad aufweist, ist es von Vorteil, wenn die integrierte Kaffeemühle ausgerüstet ist zur Herstellung eines veränderbaren Mahlgrades. Dieser ist auf die Art des Kaffees und die Art des Filters, insbesondere des Permanentfilters, abgestimmt. Entsprechende Parameter sind z.B. der Feinheitsgrad oder die Verteilung. Weitere Details einer Kaffeemühle mit variablem Mahlgrad können der DIN 44539 (in der aktuellen Fassung zum Zeitpunkt der vorliegenden Anmeldung) entnommen werden, auf welche im Rahmen der vorliegenden Anmeldung referenziert wird. Der Mahlgrad kann beispielsweise durch Variation der Mahlzeit, Drehzahl, des Drucks der Mahlelemente und/oder der Rauigkeit der Mahlelemente variabel eingestellt werden.

Zusätzlich oder alternativ zum Durchflussmengenbegrenzer 8 kann der Kaffeevollautomat 1 einen Messaufnehmer 9, insbesondere einen physikalischen Messaufnehmer zur Bestimmung einer Kaffeeeigenschaft, aufweisen. Dieser ist vorzugsweise strömungstechnisch hinter der Brüheinheit 2 angeordnet. Diese Kaffeeeigenschaft kann vorzugsweise die Leitfähigkeit, der Lichtbrechungsindex, der Druck und/oder die Temperatur sein. Eine Variante der Messung in diesem Kontext wird u.a. detailliert in der DE 10 2018 116 306 A1 beschrieben, auf welche hiermit referenziert wird. Alternativ und besonders bevorzugt kann der Messaufnehmer auch einen Volumenstrom an Kaffee ermitteln, welcher die Brüheinheit verlässt.

Schließlich wird der Kaffee an eine Ausgabeeinheit 10 weitergeleitet. Zusätzlich kann der Kaffeevollautomat 1 an verschiedenen Positionen noch weitere Sperr- und/oder Umlenkventile aufweisen.

Insbesondere weist der Kaffeevollautomat zwischen dem Warmwasserboiler 3 und der Ausgabeeinheit 10 eine Bypassleitung 17 zur Zuleitung von Heißwasser zur Ausgabeeinheit auf, ohne dass dies zuvor durch die Brüheinheit 2 geleitet wurde. Insbesondere wird durch die Bypassleitung 17 eine Verkürzung der Zubereitungszeit des Kaffees aufgrund eines parallelen Zulaufs von Heißwasser zum Kaffee ermöglicht. Insbesondere kann es sein, dass in einer Nachbrühphase kaum noch Geschmacksstoffe extrahiert werden, so dass die Zubereitungszeit durch die Zuleitung von Heißwasser auf das Wunschvolumen verkürzt wird. Dabei werden über die Bypassleitung 17 keine Bitterstoffe zugeleitet, wie dies bei längeren Extraktionszeiten in der Brüheinheit der Fall sein kann. Trotzdem kann das Wunschvolumen eingehalten werden.

Die Zuleitung des Heißwassers zur Ausgabeeinheit kann durch mehrere vordefinierte Zulaufraten erfolgen, wobei Regelorgane 16, z.B. Bypassventile 16a und 16b, zur Einstellung einer Durchflussrate vorgesehen sind. Die Durchflussrate und das Zulaufvolumen kann vorzugsweise in Abhängigkeit von den vom Messaufnehmer 9 ermittelten Werten oder in Abhängigkeit der Durchflussraten erfolgen.

Die Arbeitsweise der Brüheinheit 2 und/oder der Warmwasserboiler 3 wird über eine Steuer- und/oder Auswerteeinheit 13 gesteuert. Die Steuer- und/oder Auswerteeinheit verfügt vorzugsweise über eine Recheneinheit und über einen Datenspeicher, auf welchem einer oder mehrere Datensätze bzw. Datenbanken hinterlegt sind, welche beim Ausführen des erfindungsgemäßen Verfahrens abgerufen werden.

Das erfindungsgemäße Verfahren zur Herstellung eines Kaffeegetränks mit der Charakteristik eines Filterkaffees erfolgt nach mehreren Schritten. Dabei wird die als Kolbeneinheit ausgeführte Brüheinheit 2 und weitere Kernkomponenten des Kaffeevollautomaten zur vollautomatischen Filterkaffeeherstellung genutzt.

Der Brühkammer 12 wird eine zuvor definierte Menge Kaffeemehl zugeführt und durch dieses, mit geringem Volumenstrom, heißes Wasser bei zurückgezogenem Kolben geleitet. Der, unter diesen Bedingungen, extrahierte Kaffee weist die charakteristischen Merkmale eines frisch gebrühten Filterkaffees auf. Untersuchungen haben gezeigt das hergestellte Kaffeegetränk ein direkt vergleichbares Ergebnis mit der Filterkaffeeherstellung z.B. im Glasfilter aufweist. Nachfolgend wird das erfindungsgemäße Verfahren im Detail anhand einer Ausführungsvariante beschrieben.

In einem ersten Schritt erfolgt die Eingabe eines Getränkewunsches durch einen Nutzer. Der Getränkewunsch kann elektronisch übermittelt werden, z.B. durch eine Handy-App, oder durch Auslösen eines Bedienelements, z.B. eines Bedienfeldes oder eines Knopfes am Kaffeevollautomat.

Sodann werden in einem zweiten optionalen Schritt Kaffeebohnen auf eine für Filterkaffee optimale Größe durch die Kaffeemühle gemahlen. Bei Maschinen mit mehreren Lagertanks z.B. für Espressobohnen oder Kaffeebohnen, kann optional auch eine Auswahl der Bohnensorte erfolgen, die der Kaffeemühle zugeführt wird.

Alternativ kann der Brüheinheit auch Kaffeemehl durch Direkteinwurf - vor oder nach dem ersten Schritt - zugeführt werden.

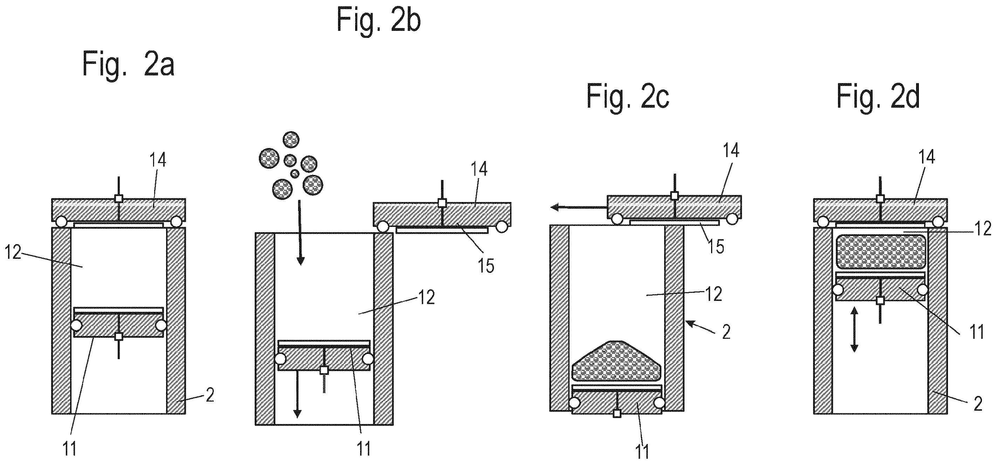

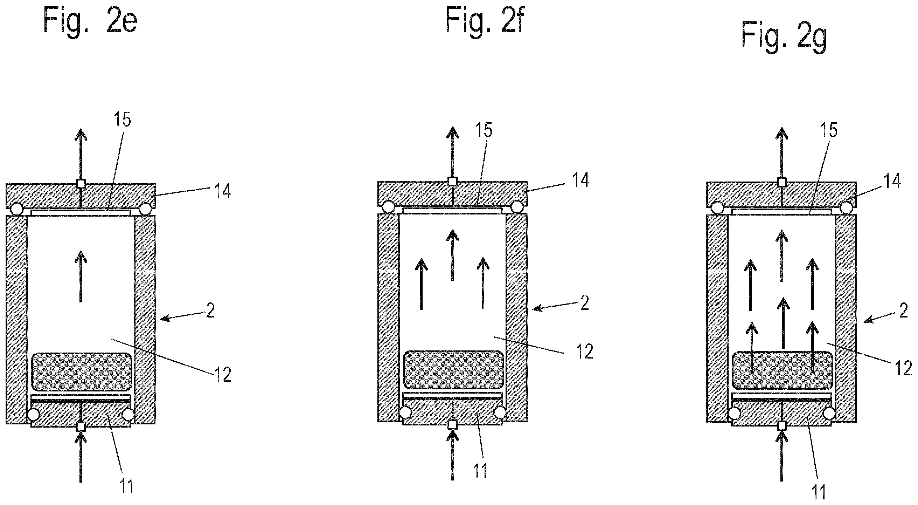

In einem dritten Schritt Fig. 2a-2c erfolgt eine Befüllung der Brühkammer 12 des Kaffeevollautomaten 1. Dabei wird, z.B. über das Öffnen eines Schiebers 14, vergleiche Fig 2a und 2b, die Brühkammer 12 geöffnet und gemahlenes Kaffeemehl, vergleiche Fig. 2b und 2c, zugeführt. In Fig. 2c liegt das Kaffeemehl sodann in Kegelform vor.

In einem vierten Schritt, dargestellt in Fig. 2c, erfolgt sodann das Schließen der Brühkammer, z.B. durch Betätigung des Schiebers 14, und ein Abdichten der Brühkammer 12. Der Kolben 11 der Brüheinheit 2 kann in Abhängigkeit von der Kaffeemehlmenge kurzzeitig bedient werde, um das Kaffeemehl in Form zu bringen. Dies erfolgt in Fig. 2d. Dabei wird das Kaffeemehl nur gering verdichtet, sondern lediglich zylindrisch ausgeformt, um eine gleichmäßigere Extraktion zu erreichen. Danach wird der Kolben wieder in seine Ursprungsposition zur Vergrößerung des Brühraumvolumens zurückgefahren.

Sodann wird die Brühkammer 12 zum Einführen von Wasser erweitert, so dass Raum besteht, dass das Kaffeemehl bei Wasserkontakt quellen kann. Dies ist in Fig. 2d und 2e erkennbar.

In einem fünften Schritt erfolgt die Zufuhr von Heißwasser mit einer ersten Flussrate. Dies wird nachfolgend als erste Brühphase, z.B. in einer Anbrühphase bezeichnet. Dabei erfolgt ein teilweises und schnelles Befüllen der Brühkammer. Um einen Phasenübergang der Aromastoffe zu gewährleisten kann optional eine gewisse Haltezeit vorgesehen sein. Bevorzugt beträgt die Flussrate während des Anbrühens zwischen 9-12 ml/s. Nach dem schnellen Zuführen in der Anbrühphase kann eine Haltezeit vorgesehen sein, in welcher der Volumenstrom reduziert wird, das oder die Brühventile allerdings geöffnet bleiben. Diese kann vorzugsweise zumindest 3 Sekunden betragen.

Sodann erfolgt in einem sechsten Schritt die erneute Zufuhr von Heißwasser in einer zweiten Brühphase mit einer zweiten Durchflussrate. Dies kann beispielsweise die Hauptbrühphase sein. Dabei wird langsam heißes Wasser zugeführt, vorzugsweise mit einer Flussrate von weniger als 5 ml/s, besonders bevorzugt weniger als 3 ml/s. Eine gleichmäßige Extraktion wird durch die langsame Durchströmung erreicht, in welcher auch lösliche Stoffe mitgenommen werden.

Am Ende des sechsten Schrittes ist der Stoffübergang eines Großteils der Aromastoffe ins Wasser abgeschlossen. Die Dauer der Brühphase kann in Abhängigkeit von der Zeit, der Menge (Volumen oder Masse des zugeführten Wassers), des Druckes und/oder, besonders bevorzugt, der Leitfähigkeit gesteuert werden.

Schließlich wird in einem siebenten Schritt die Flussrate wieder erhöht, z.B. auf 5-10 ml/s. Die Begriffe Flussrate oder Durchflussrate sind im Kontext der vorliegenden Anmeldung synonym zu verstehen. Diese dritte Flussrate entspricht der dritten Brühphase, welche die sogenannte Nachbrühphase sein kann. Diese Phase ist bevorzugt, um ein balanciertes Extraktionsergebnis zu erhalten.

Schließlich erfolgt in einem achten Schritt ein Auswurf des Kaffeemehls aus der Brühkammer.

Während der einzelnen Brühphasen kann die Brühkammer ablaufseitig geöffnet bleiben, so dass der Kaffee nach jeder Phase, also während der Zubereitung in einen Kaffeebecher abgegeben wird.

Der in der Brühkammer befindliche Kaffee kann bei Bedarf, durch Schließen des Kolbens, der Ausgabe zugeführt werden.

Der Druck von 4 bar. oder insbesondere 2,5 bar, wird bevorzugt während der Kaffeeherstellung über alle Brühphasen nicht überschritten. Vielmehr kann die Kaffeezubereitung besonders bevorzugt ohne zusätzlichen Druck durch den Kolben 11 während der Brühphasen erfolgen.

Der Phasenübergang zwischen den unterschiedlichen Brühphasen kann in Abhängigkeit folgender physikalischer Größen erfolgen und kann sowohl abhängig von der Kaffeemehl- sowie Gesamtwassermenge variieren:
a) Zeitgesteuert anhand eines Datensatzwertes oder durch eine Voreinstellung nach Ablauf Zeit x [s].
   Diese Variante variiert insbesondere mit der Kaffeemenge, dem Wasservolumen und/oder dem gewünschten Kaffeevolumen.
b) Mengengesteuert anhand eines Datensatzwertes oder durch eine Voreinstellung nach/ bei Menge x [ml].
c) Leitfähigkeitsgesteuert anhand eines Datensatzwertes oder durch eine Voreinstellung nach Unterschreiten eines Anteils von gemessenen Leitfähigkeiten von Stoffen während des Brühvorhangs [mS/cm].
In dieser Variante kann man insbesondere bestimmen, wann der Anteil an leitfähigen Substanzen zum Großteil extrahiert wurde.

Der Volumenstrom an Warm- bzw. Heißwasser während der jeweiligen Brühphasen kann geregelt oder gesteuert werden und kann sowohl abhängig von der Menge an Kaffeemehl sowie Gesamtwassermenge variieren.

Die Herstellung erfolgt vorzugsweise "Tassenweise", eine Speicherung z.B. in einem internen Warmhalter des Kaffeevollautomaten vor deren Ausgabe ist denkbar.

Das Mitführen von großen Partikeln (ugs. o.ä. Krümel) aus dem Kaffeemehl in das Getränk wird vorzugsweise durch die Verwendung des Filters verhindert Das Brühkammervolumen kann variabel vorzugsweise vor der Brühung automatisch verändert und auf das gewünschte Ausgabevolumen des Kaffees angepasst werden.

Der Brühdruck kann vorzugsweise vor und / oder hinter der Brühkammer 12 zur Messdatenerhebung ermittelt werden.

Nachfolgend wird ein konkrete Zubereitungssequenz als eine Ausführungsvariante angegeben.

### Brühphasen

| | | | | |
|---|---|---|---|---|
| I. | 0-8 | s | [80ml] | Anbrühen |
| II. | 8-40 | s | [70ml] | Brühen |
| III. | 40-70 | s | [150ml] | Nachbrühen |

### Parameter

| | | |
|---|---|---|
| Menge: | 300 | ml |
| Dauer: | 70 | s |
| Einwaage: | 10 | g |
| Leitfähigkeit: | 2,45 | mS/cm (Ø) |
| Brühdruck: | 0,5 | bar |
| Brühtemperatur: | 92 | °C |

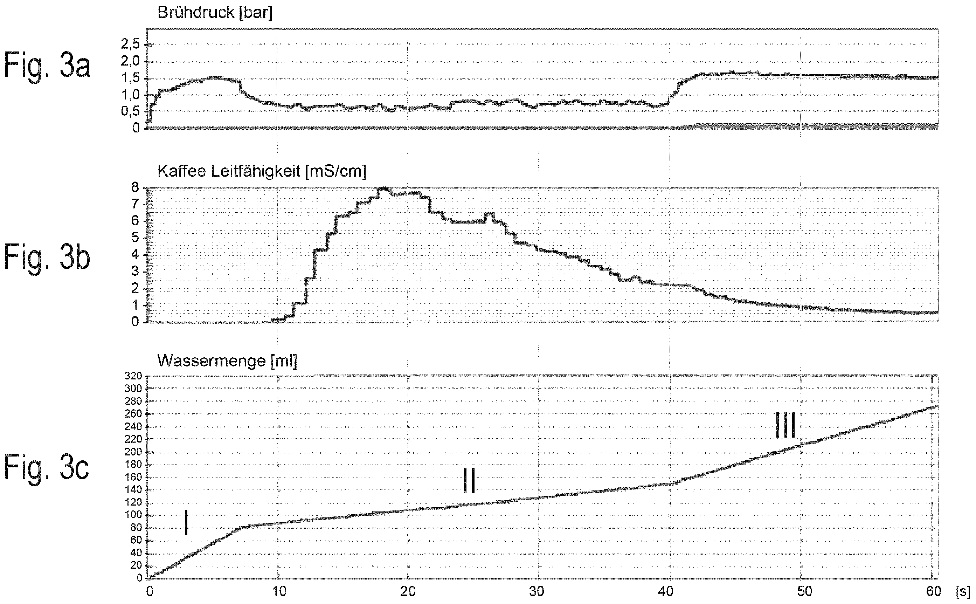

Bei diesen Bedingungen wurden die Messdiagramme der Fig. 3 erstellt. Man erkennt in der der Anbrühphase I einen Druckanstieg aufgrund der schnellen Zufuhr von Wasser wobei ein geringer Druck durch den Kolben 11 aufgebaut werden kann.

Während der Hauptbrühphase II erkennt man anhand des Anstiegs der Leitfähigkeit, (Fig. 3b) dass in dieser Phase ein Großteil von Inhaltsstoffen übergehen. Die Durchflussrate (Fig. 3c) ist deutlich geringer als in der Anbrühphase I. Wie man aus der Druckkurve erkennen kann, erfolgt die Hauptbrühphase ohne wesentlichen Druckaufbau (Fig. 3a).

Dieser Druck steigt in der Nachbrühphase III wieder an. Die Durchflussgeschwindigkeit ist ebenfalls erhöht. Die Leitfähigkeit ist im Vergleich zur Hauptbrühphase gering und nimmt im Verlauf stetig weiter ab.

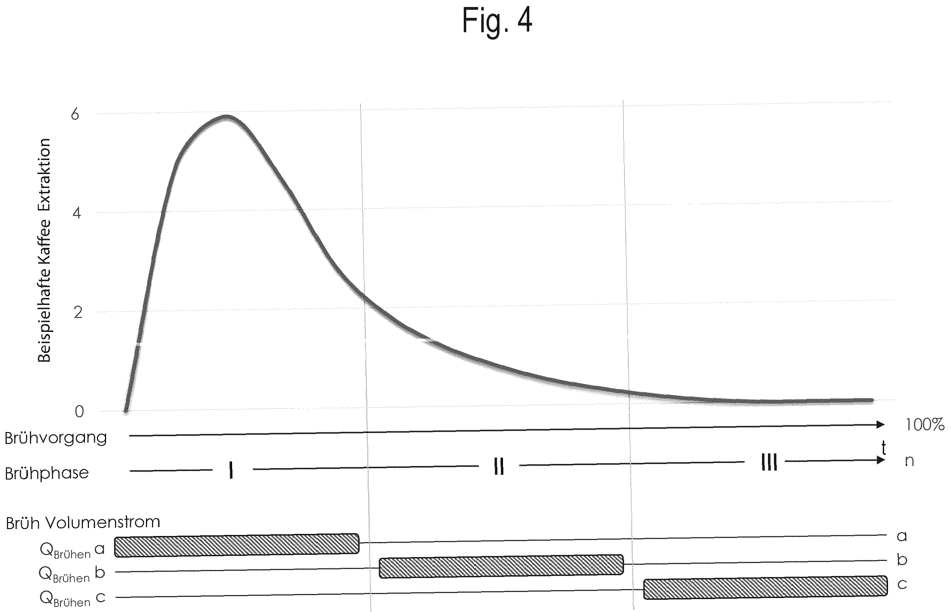

In Fig. 4 ist eine erste Variante dargestellt, in welcher ein Brühvorgang in drei unterschiedlichen Brühphasen I, II, III verläuft. Die Volumenströme Q_{Brühen} a, b und c und damit auch die erste, zweite und dritte Durchflussrate variieren je nach Brühphase. Anhand der Leitfähigkeit ist die Extraktion an Geschmacksstoffen nachvollziehbar. Dabei erkennt man, dass insbesondere bei der dritten Brühphase III nur noch wenige Geschmacksstoffe extrahiert werden.

Bevorzugte Durchflussraten bzw. Volumenströme für die einzelnen Brühphasen der Fig. 4 aber auch für andere Verfahrensvarianten sind die folgenden:

| | | |
|---|---|---|
| Erste Durchflussrate: | Q_{Brühen} a: | 2 -5 ml/s |
| Zweite Durchflussrate: | Q_{Brühen} b: | 5 -10 ml/s |
| Dritte Durchflussrate: | Q_{Brühen} c: | 10 -15 ml/s |

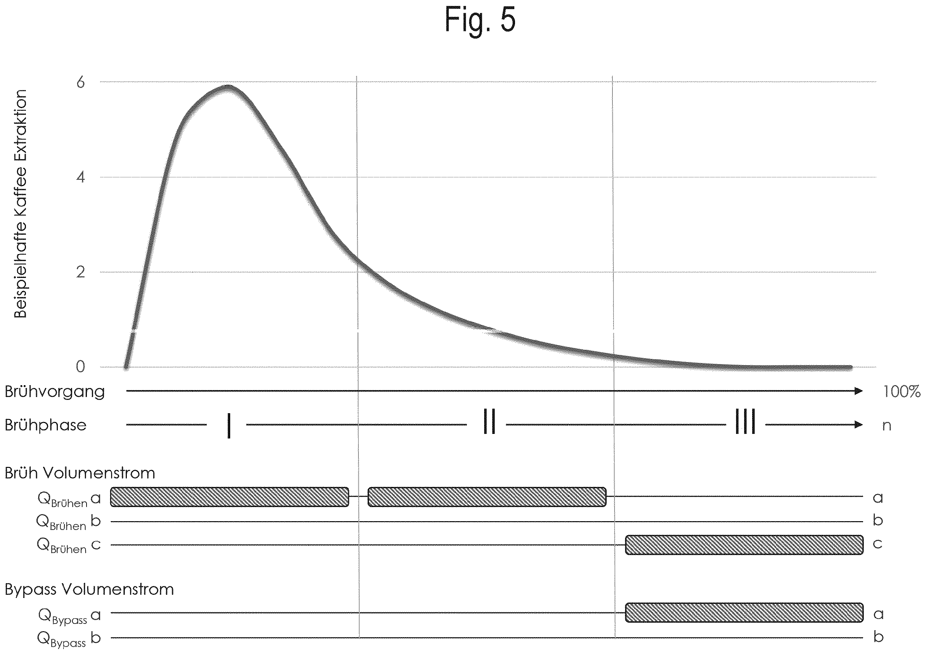

Fig 5 zeigt eine alternative zweite Variante eines erfindungsgemäßen Verfahrens in welchem zwei Brühphasen I und II mit identischen Volumenströmen Q_{Brühen} a durch die Brühkammer geleitet werden und in welchem eine dritte Brühphase III mit einem differenten Volumenstrom Q_{Brühen} c zeitgleich mit einem Volumenstrom an Heißwasser über eine Bypassleitung Q_{Bypass} a betrieben wird. In dieser dritten Brühphase III geht es neben einer Restextraktion ggf. auch von einigen Bitterstoffen, insbesondere auch um das Erreichen eines Wunschvolumens an Kaffee.

Wie anhand Fig. 5 erkennbar ist, muss das erfindungsgemäße Verfahren nicht zwingend drei Brühphasen mit drei verschiedenen Volumenströmen bzw. Durchflussraten umfassen, allerdings besteht die Möglichkeit dies zu tun und dadurch einen ausgewogeneren Geschmack zu erreichen.

Der Bypassvolumenstrom Q_{Bypass} b kann beispielsweise in der zweiten Brühphase II zugeschalten werden oder am Ende des Brühvorgangs nach Abschluss der dritten Brühphase III.

### Bezugszeichen

- 1: Kaffeevollautomat
- 2: Brüheinheit
- 3: Warmwasserboiler
- 4: Wasserzulauf
- 5: Wasserpumpe
- 6: Messeinrichtung zur Durchflussmengenbestimmung
- 7: Rückstoßventil
- 8: Durchflussmengenbegrenzer
- 8a-8c: Brühventile
- 9: Messaufnehmer
- 10: Ausgabeeinheit
- 11: Kolben
- 12: Brühkammer
- 13: Steuer- und/oder Auswerteeinheit
- 14: Schieber
- 15: Filter
- 16: Regelorgane
- 16a-16b: Bypass-Ventile
- 17: Bypass

- Fig. 3a: Druckmessung über den Brühverlauf
- Fig. 3b: Leitfähigkeitsdiagramm über den Brühverlauf
- Fig. 3c: Durchflussmessung über den Brühverlauf

- I: erste Brühphase
- II: zweite Brühphase
- III: dritte Brühphase

## Patentansprüche

1. Verfahren zur Herstellung eines Kaffeegetränks mit einem Filterkaffeegeschmack durch einen Kaffeevollautomaten (1), wobei der Kaffeevollautomat (1) zumindest eine Brüheinheit (2) mit einer Brühkammer und einen in der Brühkammer beweglich, insbesondere linear verschiebbaren, Kolben (11) zur Einstellung eines Brühkammervolumens aufweist, wobei das Verfahren, mit zumindest folgenden Schritten:
a. Befüllen der Brühkammer (12) mit Kaffeemehl; und
b. Zuführen von Wasser in die Brühkammer (12) zum Zwecke einer Extraktion im Rahmen eines Brühvorgangs,
wobei zumindest der Kolben (11) während zumindest einer Brühphase des Brühvorgangs in einer Position angeordnet ist, in welcher das Brühkammervolumen größer ist als das Volumen des Kaffeemehls in einem geschütteten Zustand in der Brühkammer (12) nach der erfolgten Befüllung gemäß Schritt a, wobei der Brühvorgang mehrere Brühphasen (I, II, III) aufweist, in welchen jeweils Wasser mit, bezogen auf die Brühphasen (I, II, III), unterschiedlichen Durchflussraten durch das Kaffeemehl geleitet werden und wobei der Wechsel zwischen den Brühphasen (I, II, III) durch messtechnische Erfassung und/oder Ermittlung einer physikalischen Größe, insbesondere der Leitfähigkeit, des Brechungsindex und/oder der zugeführten Menge und/oder Volumen an Kaffeemehl und/oder Wasser und/oder der abgeführten Menge an Kaffee erfolgt,
**dadurch gekennzeichnet, dass**
der Kaffeevollautomat eine Bypassleitung ausgehend von einem Warmwasserboiler zu einer Ausgabeeinheit (19) mit einem oder mehreren Regelorganen aufweist, wobei eine Ausgabe von Heißwasser, vorzugsweise zeitgleich zum Brühvorgang und/oder der Ausgabe von Kaffee aus der Brüheinheit, zum Erreichen eines vorbestimmten Kaffeevolumens erfolgt.

2. Verfahren nach Anspruch 1, **dadurch gekennzeichnet, dass** eine Änderung der Brühphasen (I, II, III) durch Erfassen einer zugeführten Menge Wasser unter Berücksichtigung der zugeführten Menge an Kaffeemehl eingestellt wird.

3. Verfahren nach Anspruch 1 oder 2, **dadurch gekennzeichnet, dass** eine Änderung der Brühphasen (I, II, III) durch das Erfassen von Messwerten durch einen Messaufnehmer (9) erfolgt, wobei ein Messaufnehmer (9) zur Erfassung strömungstechnisch hinter oder vorzugsweise vor der Brüheinheit (2) angeordnet ist.

4. Verfahren nach einem der vorhergehenden Ansprüche, **dadurch gekennzeichnet, dass** das Wasser während der zumindest einen Brühphase durch das Kaffeemehl fließt, ohne dass eine gegenüber dem geschütteten Zustand weiter verdichtende mechanische Anpresskraft auf das Kaffeemehl ausgeübt wird.

5. Verfahren nach einem der vorhergehenden Ansprüche, **dadurch gekennzeichnet, dass** das Kaffeemehl im geschütteten Zustand bei Beginn des Schrittes b. im Wesentlichen unverdichtet vorliegt.

6. Verfahren nach einem der vorhergehenden Ansprüche, **dadurch gekennzeichnet, dass** das Brühkammervolumen zu Beginn von Schritt b zumindest 50% größer ist, vorzugsweise wenigstens doppelt so groß ist, wie das Volumen des Kaffeemehls im geschütteten Zustand.

7. Verfahren nach einem der vorhergehenden Ansprüche, **dadurch gekennzeichnet, dass** die Brühkammer derart aufgebaut ist, dass zu Beginn von Schritt b lediglich das Kaffeemehl innerhalb der Brühkammer angeordnet ist.

8. Verfahren nach einem der vorhergehenden Ansprüche, **dadurch gekennzeichnet, dass** der Brühvorgang eine erste Brühphase (I) mit einer ersten Durchflussrate und eine zweite Brühphase (II) mit einer zweiten Durchflussrate und vorzugsweise eine dritte Brühphase (III) mit einer dritten Durchflussrate aufweist, wobei die zweite Durchflussrate kleiner ist als die erste und/oder die dritte Durchflussrate.

9. Verfahren nach einem der vorhergehenden Ansprüche, **dadurch gekennzeichnet, dass** der Kaffeevollautomat (1) eine Kaffeemühle umfasst, wobei das Verfahren eine Mahlung von Kaffeebohnen auf eine vordefinierte Größe für Filterkaffee umfasst.

10. Verfahren nach einem der vorhergehenden Ansprüche, **dadurch gekennzeichnet, dass** der Kolben (11) vor dem Schritt b. ein Informbringen der Schüttung des Kaffeemehls ohne wesentliche Verdichtung der Schüttung des Kaffeemehls vornimmt, so dass das Volumen der Brühkammer (12) während des Informbringens verringert wird.

11. Verfahren nach Anspruch 10, **dadurch gekennzeichnet, dass** vor dem Brühvorgang der Kolben (11) in die erste Position zurückgefahren wird, so dass sich das Volumen der Brühkammer (12) wieder erweitert, vorzugsweise zumindest um 100 % gegenüber dem Volumen im in Form gebrachten Zustand.

12. Verfahren nach einem der vorhergehenden Ansprüche, **dadurch gekennzeichnet, dass** der Kolben (11) während des gesamten Brühvorgangs in der ersten Position verbleibt.

13. Verfahren nach einem der vorhergehenden Ansprüche, **dadurch gekennzeichnet, dass** der Kolben (11) in eine zweite Position stellbar ist, in welcher er, insbesondere während des Informbringens, auf dem Kaffeemehl entlang einer Stirnfläche, vorzugsweise vollflächig, aufliegt, ohne eine Anpresskraft auf das Kaffeemehl auszuüben.

14. Verfahren nach einem der vorhergehenden Ansprüche, **dadurch gekennzeichnet, dass** der Kolben (11) in der ersten Position, begrenzt durch die bauliche Ausgestaltung der Brüheinheit (2), maximal ausgezogen vorliegt.

15. Verfahren nach einem der vorhergehenden Ansprüche, **dadurch gekennzeichnet, dass** der Kaffeevollautomat (1) einen Filter (15), insbesondere einen CIP-fähigen Permanentfilter, insbesondere als Teil der Brüheinheit (2), aufweist.

16. Verfahren nach einem der vorhergehenden Ansprüche, **dadurch gekennzeichnet, dass** der Brühdruck während des Brühvorgangs weniger als 4 bar, vorzugsweise weniger als 2,5 bar, beträgt.

17. Verfahren nach einem der vorhergehenden Ansprüche, **dadurch gekennzeichnet, dass** die Brühkammer (12) bis auf einen Zulauf für Heißwasser und/oder einen Auslauf für Kaffee während des Brühvorgangs geschlossen vorliegt.

18. Verfahren nach einem der vorhergehenden Ansprüche, **dadurch gekennzeichnet, dass** ein stufenweises Einstellen der Durchflussrate während des Brühvorgangs zum Wechsel zwischen zwei Brühphasen erfolgt.

19. Kaffeevollautomat (1) umfassend zumindest eine Brüheinheit (2) mit einem linear verschiebbaren Kolben (11) zur Einstellung eines Volumens einer Brühkammer (12) der Brüheinheit (2) und eine Steuer- und/oder Auswerteeinheit (13), welche eingerichtet ist zur Ausführung eines Verfahrens nach einem der vorhergehenden Ansprüche.

## Claims

1. Method for making a coffee beverage with a filter-coffee taste by means of a fully automatic coffee machine (1), wherein the fully automatic coffee machine (1) has at least one brewing unit (2) with a brewing chamber and has a plunger (11) which is movable, in particular linearly displaceable, in the brewing chamber for setting a brewing chamber volume, wherein the method, with at least the following steps of:
a. filling the brewing chamber (12) with ground coffee; and
b. feeding water into the brewing chamber (12) for the purpose of extraction in the course of a brewing process,
wherein at least the plunger (11) is arranged during at least one brewing phase of the brewing process in a position in which the brewing chamber volume is greater than the volume of the ground coffee in a loosely filled state in the brewing chamber (12) after the filling according to step a has taken place, wherein the brewing process comprises a number of brewing phases (I, II, III) in which water in each case is made to pass through the ground coffee with different flow rates relative to the brewing phases (I, II, III) and wherein the change between the brewing phases (I, II, III) is performed by measuring instruments detecting and/or determining a physical variable, in particular conductivity, the refractive index and/or the amount and/or volume of ground coffee and/or water supplied and/or the amount of coffee removed, **characterized in that** the fully automatic coffee machine has a bypass line starting from a hot water boiler to a dispensing unit (19) with one or more control elements, wherein a dispensing of hot water takes place, preferably simultaneously with the brewing process and/or the dispensing of coffee from the brewing unit, to achieve a predetermined coffee volume.

2. Method according to claim 1, **characterized in that** a change of the brewing phases (I, II, III) is adjusted by detecting a supplied amount of water by taking into account the supplied amount of ground coffee.

3. Method according to claim 1 or 2, **characterized in that** a change of the brewing phases (I, II, III) is performed by detecting measured values by a measuring sensor (9), wherein a measuring sensor (9) for detection is arranged downstream or preferably upstream of the brewing unit (2) in terms of flow.

4. Method according to one of the preceding claims, **characterized in that** the water flows through the ground coffee during the at least one brewing phase without exerting a mechanical contact pressure on the ground coffee that is further compressive compared to the loosely filled state.

5. Method according to one of the preceding claims, **characterized in that** the ground coffee is substantially present in an uncompacted manner in the loosely filled state at the start of step b.

6. Method according to one of the preceding claims, **characterized in that** the brewing chamber volume at the beginning of step b is at least 50% larger, preferably at least twice as large, as the volume of the ground coffee in the loosely filled state.

7. Method according to one of the preceding claims, **characterized in that the** brewing chamber is constructed in such a way that at the beginning of step b only the ground coffee is arranged inside the brewing chamber.

8. Method according to one of the preceding claims, **characterized in that** the brewing process comprises a first brewing phase (I) with a first flow rate and a second brewing phase (II) with a second flow rate and preferably a third brewing phase (III) with a third flow rate, wherein the second flow rate is smaller than the first and/or the third flow rate.

9. Method according to one of the preceding claims, **characterized in that** the fully automatic coffee machine (1) comprises a coffee grinder, wherein the method comprises grinding coffee beans to a predefined size for filter coffee.

10. Method according to one of the preceding claims, **characterized in that** the plunger (11) performs, prior to step b, a shaping of the bulk of the ground coffee without substantial compression of the bulk of the ground coffee, so that the volume of the brewing chamber (12) is reduced during the shaping process.

11. Method according to claim 10, **characterized in that** prior to the brewing process, the plunger (11) is returned to the first position so that the volume of the brewing chamber (12) expands again, preferably by at least 100% compared to the volume in the shaped state.

12. Method according to one of the preceding claims, **characterized in that** the plunger (11) remains in the first position during the entire brewing process.

13. Method according to one of the preceding claims, **characterized in that** the plunger (11) can be adjusted to a second position in which it rests on the ground coffee along an end face, preferably over the entire surface, without exerting a contact pressure on the ground coffee, in particular during the shaping process.

14. Method according to one of the preceding claims, **characterized in that** the plunger (11), in the first position, is present in the maximally extended position, limited by the structural design of the brewing unit (2).

15. Method according to one of the preceding claims, **characterized in that** the fully automatic coffee machine (1) has a filter (15), in particular a CIP-capable permanent filter, in particular as part of the brewing unit (2).

16. Method according to one of the preceding claims, **characterized in that the brewing** pressure during the brewing process is less than 4 bar, preferably less than 2.5 bar.

17. Method according to one of the preceding claims, **characterized in that** the brewing chamber (12) is closed during the brewing process except for an inlet for hot water and/or an outlet for coffee.

18. Method according to one of the preceding claims, **characterized in that** a stepwise adjustment of the flow rate is performed during the brewing process to alternate between two brewing phases.

19. Fully automatic coffee machine (1) comprising at least one brewing unit (2) with a linearly displaceable plunger (11) for setting a volume of a brewing chamber (12) of the brewing unit (2) and a control and/or evaluation unit (13) which is set up to carry out a method according to one of the preceding claims.

## Revendications

1. Procédé pour la fabrication d'une boisson à base de café ayant le goût d'un café filtre par une machine à café automatique (1), laquelle machine à café automatique (1) comporte au moins une unité d'infusion (2) avec une chambre d'infusion et un piston (11) capable de déplacement, en particulier de translation linéaire, dans la chambre d'infusion pour ajuster un volume de la chambre d'infusion, lequel procédé comprend au moins les étapes suivantes :
a. remplissage de la chambre d'infusion (12) avec du café moulu et
b. introduction d'eau dans la chambre d'infusion (12) en vue d'une extraction au cours d'un processus d'infusion,
dans lequel le piston (11), au moins, est disposé au moins pendant une phase d'infusion du processus d'infusion dans une position dans laquelle le volume de la chambre d'infusion est plus grand que le volume du café moulu en vrac dans la chambre d'infusion (12) après le remplissage de l'étape a, dans lequel le processus d'infusion comporte plusieurs phases d'infusion (I, II, III) durant lesquelles de l'eau est acheminée à travers le café moulu à des débits différents selon les phases d'infusion (I, II, III), et dans lequel le passage d'une des phases d'infusion (I, II, III) à une autre est effectué par la mesure et/ou la détermination d'une grandeur physique, en particulier de la conductivité, de l'indice de réfraction et/ou de la quantité apportée et/ou du volume de café moulu et/ou d'eau et/ou de la quantité de café extraite, **caractérisé en ce que** la machine à café automatique comporte une conduite de dérivation partant d'une bouilloire vers une unité de sortie (19) avec un ou plusieurs organes de régulation, une sortie d'eau chaude se produisant, de préférence en même temps que le processus d'infusion et/ou que la sortie de café hors de l'unité d'infusion, pour atteindre un volume de café prédéterminé.

2. Procédé selon la revendication 1, **caractérisé en ce qu'**un changement des phases d'infusion (I, II, III) est réglé par l'acquisition d'une quantité d'eau apportée, en tenant compte de la quantité de café moulu apportée.

3. Procédé selon la revendication 1 ou 2, **caractérisé en ce qu'**un changement des phases d'infusion (I, II, III) est exécuté par l'acquisition de valeurs de mesure par un capteur de mesure (9), un capteur de mesure (9) étant disposé après ou de préférence avant l'unité d'infusion (2), dans le sens de l'écoulement, en vue de l'acquisition.

4. Procédé selon l'une des revendications précédentes, **caractérisé en ce que** l'eau s'écoule à travers le café moulu pendant l'au moins une phase d'infusion sans qu'une force de pressage mécanique soit exercée sur le café moulu pour le compacter davantage par rapport à l'état en vrac.

5. Procédé selon l'une des revendications précédentes, **caractérisé en ce que** le café moulu en vrac n'est sensiblement pas compacté au début de l'étape b.

6. Procédé selon l'une des revendications précédentes, **caractérisé en ce que** le volume de la chambre d'infusion au début de l'étape b est plus grand d'au moins 50 %, de préférence deux fois plus grand, que le volume du café moulu en vrac.

7. Procédé selon l'une des revendications précédentes, **caractérisé en ce que** la chambre d'infusion est conformée de telle manière que, au début de l'étape b, seul le café moulu est disposé à l'intérieur de la chambre d'infusion.

8. Procédé selon l'une des revendications précédentes, **caractérisé en ce que** le processus d'infusion comporte une première phase d'infusion (I) à un premier débit et une deuxième phase d'infusion (II) à un deuxième débit et, de préférence, une troisième phase d'infusion (III) à un troisième débit, le deuxième débit étant plus faible que le premier débit et/ou le troisième.

9. Procédé selon l'une des revendications précédentes, **caractérisé en ce que** la machine à café automatique (1) comprend un moulin à café, le procédé comprenant une mouture de grains de café à une grosseur prédéfinie pour du café filtre.

10. Procédé selon l'une des revendications précédentes, **caractérisé en ce que** le piston (11) met le tas de café moulu en forme avant l'étape b sans notablement le compacter, de telle sorte que le volume de la chambre d'infusion (12) est réduit pendant la mise en forme.

11. Procédé selon la revendication 10, **caractérisé en ce que** le piston (11) est reculé dans la première position avant le processus d'infusion, de telle sorte que le volume de la chambre d'infusion (12) augmente à nouveau, de préférence d'au moins 100 % par rapport au volume dans l'état mis en forme.

12. Procédé selon l'une des revendications précédentes, **caractérisé en ce que** le piston (11) reste dans la première position pendant tout le processus d'infusion.

13. Procédé selon l'une des revendications précédentes, **caractérisé en ce que** le piston (11) peut être placé dans une deuxième position, dans laquelle il repose sur le café moulu le long d'une face d'extrémité, de préférence sur toute sa surface, en particulier pendant la mise en forme, sans exercer une force de pressage sur le café moulu.

14. Procédé selon l'une des revendications précédentes, **caractérisé en ce que** le piston (11) est sorti au maximum dans la première position, dans les limites de la construction de l'unité d'infusion (2).

15. Procédé selon l'une des revendications précédentes, **caractérisé en ce que** la machine à café automatique (1) comporte un filtre (15), en particulier un filtre à demeure pouvant être nettoyé par CIP, qui fait en particulier partie de l'unité d'infusion (2).

16. Procédé selon l'une des revendications précédentes, **caractérisé en ce que** la pression d'infusion pendant le processus d'infusion est inférieure à 4 bars, de préférence inférieure à 2,5 bars.

17. Procédé selon l'une des revendications précédentes, **caractérisé en ce que** la chambre d'infusion (12) est fermée pendant le processus d'infusion, hormis une arrivée d'eau chaude et/ou un écoulement pour le café.

18. Procédé selon l'une des revendications précédentes, **caractérisé en ce que** le débit est ajusté par paliers au cours du processus d'infusion pour le passage entre deux phases d'infusion.

19. Machine à café automatique (1) comprenant au moins une unité d'infusion (2) avec un piston (11) capable de translation linéaire pour ajuster un volume d'une chambre d'infusion (12) de l'unité d'infusion (2) et une unité de commande et d'analyse (13) qui est configurée pour exécuter un procédé selon l'une des revendications précédentes.
